# EUROPEAN PATENT APPLICATION

(11) **EP 4 566 434 A1**
(43) Date of publication of application: **11.06.2025**
(21) Application number: 24204232.3
(22) Date of filing: 02.10.2024
(51) Int. Cl.: A01B 69/04

(54) **SYSTEM AND METHOD FOR PLANNING AND EXECUTING A TURN FOR A MOBILE MACHINE**

(30) Priority: 07.12.2023 US 202363607377 P
(71) Applicant: AGCO International GmbH, 8212 Neuhausen am Rheinfall (CH)
(72) Inventor: VOGLER, Theo, 87616 Marktoberdorf (DE)
(74) Representative: AGCO Intellectual Property Department

(57) **Abstract**

A method of controlling a mobile machine (10) includes determining a slope of a ground surface on which the mobile machine will execute a turn, determining a location of a next working path (108), planning a turn maneuver (102, 104, 106) according to the slope of the ground surface on which the mobile machine will execute the turn maneuver and according to the location of the next working path (108), and automatically controlling the mobile machine to execute at least a portion of the planned turn maneuver.

## Description

### FIELD

Embodiments of the present invention relate to systems and methods for automated guidance of mobile machinery. More particularly, embodiments of the present invention relate to systems and methods for planning and executing turns by mobile machines operating in a field.

### BACKGROUND

In agricultural production machines such as tractors, sprayers and harvesters are used to till and prepare soil, plant crops, apply fertilizer and other products, and harvest the resulting crops. It is common for such machines to work a field by traveling along a series of working paths in the field wherein the machine turns at the end of each working path to begin travelling along the next working path. An area at the end of a working path where machines execute turn maneuvers is referred to as a headland. It is common for a field to have two headlands located at opposing ends of the field or to have a single, large headland area that wraps around an outer edge of a field. Because headland areas are used for executing turns and other machine maneuvers, they typically carry more machine traffic and therefore incur greater soil compaction than other, non-headland areas which can have a negative impact on crop production. For this reason some producers prefer to make the headlands as small as possible, limiting the room for machines to turn and maneuver.

Machines may make different turns in headlands depending on such factors as the type of machine and the size and shape of the headland. Turns such as U turns and a keyhole turns involve turning the machine by following a curved path from the end of one working path to the beginning of the next working path without stopping or reversing the direction of the machine. Some types of turns, such as K turns and Y turns, involve reversing the direction of the machine while transitioning from the end of one working path to the beginning of the next working path. Turns that do not involve reversing the direction of the machine may be simpler to execute, particularly if the machine is towing an implement, while turns that involve reversing the direction of the machine typically require less space and may be desired or even required with smaller headlands.

The above section provides background information related to the present disclosure which is not necessarily prior art.

### SUMMARY

Embodiments of the invention address the problem of machine tipping described herein by taking into account the slope of the ground surface on which the turn maneuver will be executed, thereby avoiding scenarios that present a risk of tipping.

A mobile machine constructed according to an embodiment of the invention comprises a chassis, a motive system, one or more ground engaging elements for supporting the chassis on a ground surface and moving the mobile machine along the ground surface, and a controller. At least one of the ground engaging elements is driven by the motive system to move the mobile machine along the ground surface. The controller is configured to determine a slope of a ground surface on which the mobile machine will execute a turn, determine a location of a next working path, plan a turn maneuver according to the slope of the ground surface on which the mobile machine will execute the turn maneuver and according to the location of the next working path, and automatically control the mobile machine to execute at least a portion of the planned turn maneuver.

In some embodiments, the controller is configured to plan the turn maneuver such that the mobile machine does not move in reverse downward on a sloping ground surface. In other embodiments of the invention the controller is configured to plan the turn maneuver such that the mobile machine does not move forward along a downward-sloping ground surface.

In some embodiments, the controller is further configured to plan the turn maneuver such that the turn maneuver includes a first downhill forward path segment, a second uphill reverse path segment, and a third downhill forward path segment. In some embodiments, the first path segment is a curved path segment from an end of a first working path to a first end of the second path segment, the second path segment is substantially straight, and the third path segment is a curved path segment from a second end of the second path segment to an end of a second working path. In other embodiments the second path segment is curved.

In some embodiments the controller is configured to plan a K turn if the next working path is to the right and the ground surface is sloped downward toward the right. In some embodiments the controller is configured to plan a K turn if the next working path is to the left and the ground surface is sloped downward toward the left. In some embodiments the controller is configured to plan a Y turn if the next working path is to the left and the ground surface is sloped downward toward the right. In some embodiments the controller is configured to plan a Y turn if the next working path is to the right and the ground surface is sloped downward toward the left.

In some embodiments, the controller is configured to use pre-existing field data to determine the slope of the ground surface. In some embodiments, the is configured to determine the slope of the ground surface by detecting and recording elevation and/or tilt of the mobile machine as it travels along the ground surface.

A method of controlling a mobile machine according to an embodiment of the invention comprises determining, using a controller, a slope of a ground surface on which the mobile machine will execute a turn; determining, using the controller, a location of a next working path; planning, using the controller, a turn maneuver according to the slope of the ground surface on which the mobile machine will execute the turn maneuver and according to the location of the next working path; and automatically controlling the mobile machine, using the controller, to execute at least a portion of the planned turn maneuver.

This summary is provided to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF DRAWINGS

Embodiments of the present invention are described in detail below with reference to the attached drawing figures, wherein:
FIG. 1 illustrates a tractor carrying a mounted implement on a sloped ground surface.
FIG. 2 illustrates the tractor of FIG. 1 tipping rearward as a result of operating on the sloped ground surface.
FIG. 3 illustrates a tractor constructed in accordance with an embodiment of the invention.
FIG. 4 is a block diagram of an electronic system associated with the tractor of FIG. 3 constructed in accordance with an embodiment of the invention.
FIG. 5 illustrates path segments followed by a mobile machine executing an exemplary K turn.
FIG. 6 illustrates path segments followed by a mobile machine executing an exemplary Y turn.
FIG. 7 is a flow diagram illustrating certain steps in a method of planning a turn maneuver for a mobile machine.
FIG. 8 illustrates how a field is worked by a mobile machine including a plurality of working paths and turn maneuvers between working paths.

The drawing figures do not limit the present invention to the specific embodiments disclosed and described herein. The drawings are not necessarily to scale, emphasis instead being placed upon clearly illustrating the principles of the invention.

### DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the spirit and scope of the invention as defined by the claims. The following description is, therefore, not to be taken in a limiting sense. Further, it will be appreciated that the claims are not necessarily limited to the particular embodiments set out in this description.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

When elements or components are referred to herein as being "connected" or "coupled," the elements or components may be directly connected or coupled together or one or more intervening elements or components may also be present. In contrast, when elements or components are referred to as being "directly connected" or "directly coupled," there are no intervening elements or components present.

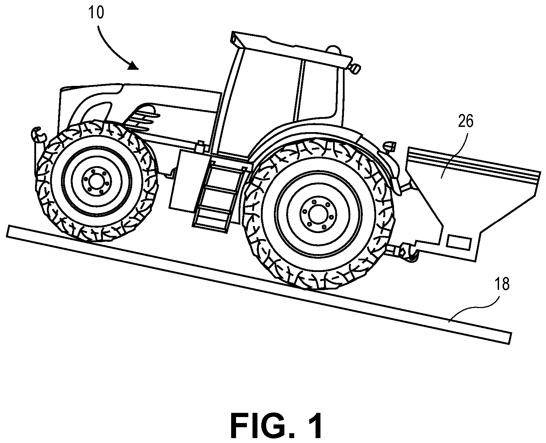

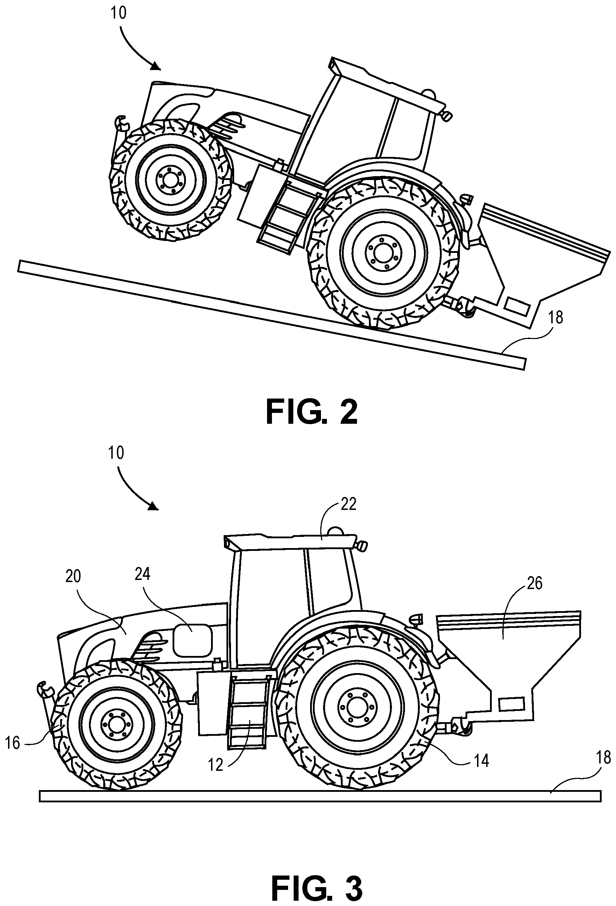

A challenge associated with operating mobile machines on sloped surfaces is illustrated in FIG. 1 and FIG. 2 wherein a tractor 10 is shown on a sloped ground surface 18. When the tractor 10 is carrying a mounted implement 26 it can be susceptible to tipping backwards, as illustrated in FIG. 2, because the center of gravity of the tractor 10 is shifted toward the rear of the machine (toward the right in FIGs. 1 and 2). While tipping can occur in various different scenarios, it is particularly a problem when the tractor 10 slows or stops while traveling in reverse (toward the right in FIGs. 1 and 2) because the rearward momentum of the tractor 10 tends to push the tractor 10 into rearward tipping. Tipping is also particularly a problem when the tractor 10 accelerates while traveling forward (toward the left in FIGs. 1 and 2) because the torque applied to the rear wheels tends to push the tractor 10 into rearward tipping. This risk can present itself when a mobile machine is executing a turn maneuver that involves the machine moving in a reverse direction downhill on a sloped surface. Embodiments of the present invention address the problem of mobile machines tipping while carrying implements on sloped ground surfaces by providing a method of planning turn maneuvers that avoid travelling on sloped ground surfaces in a manner that is likely to cause tipping.

More particularly, certain embodiments of the invention involve a mobile machine comprising a chassis, a motive system, one or more ground engaging elements for supporting the chassis on a ground surface and moving the mobile machine along the ground surface as driven by the motive system, and a controller. The controller is configured to determine a slope of a ground surface on which the mobile machine will execute a turn, determine a location of a next working path, plan a turn maneuver according to the slope of the ground surface on which the mobile machine will execute the turn maneuver and according to the location of the next working path, and automatically control the mobile machine to execute at least a portion of the planned turn maneuver. The mobile machine avoids scenarios where tipping is likely by using the slope of the ground surface to plan the turn maneuver.

Turning now to Fig. 3, a mobile machine constructed in accordance with embodiments of the invention is illustrated. The mobile machine is a tractor 10 including a chassis 12, ground engaging elements comprising a pair of rear wheels 14 and a pair of steerable front wheels 16 supporting the chassis on the ground surface 18 and moving the tractor 10 along the ground surface 18, a motive system 20 for driving movement of one or more of the wheels 14, 16 and for powering other components of the tractor 10 such as a hydraulic system, an electrical system and a power take-off, an operator cabin 22, and an electronic system 24. The motive system 20 includes an internal combustion engine and a transmission for transferring mechanical power to one or more of the wheels 14, 16. It will be appreciated that the motive system 20 may include other, equally preferred sources of mechanical power such an electric motor or system of electric motors that drive one or more of the wheels 14, 16. The tractor 10 includes a mounted implement 26 carried by the tractor 10 behind the rear wheels 14.

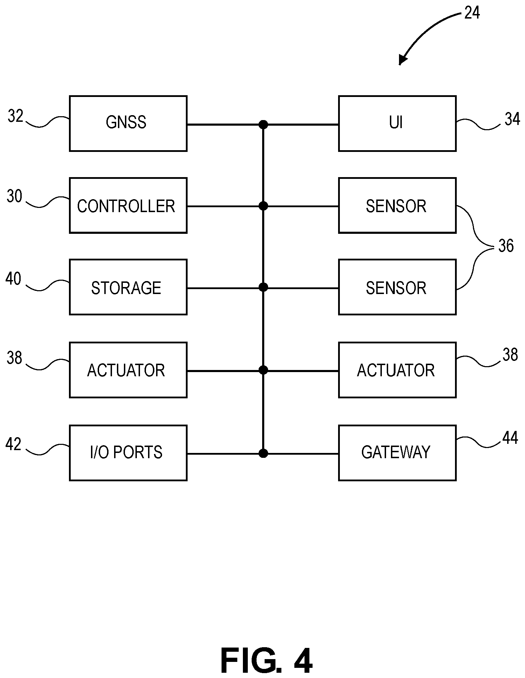

Some components of the electronic system 24 are illustrated in the block diagram of FIG. 4. The system 24 broadly includes a controller 30, a position determining device 32, a user interface 34, one or more sensors 36, one or more actuators 38, one or more storage components 40, one or more input/out ports 42 and a communications gateway 44.

The position determining device 32 includes a global navigation satellite system (GNSS) receiver, such as a device configured to receive signals from one or more positioning systems such as the United States' global positioning system (GPS), the European GALILEO system, the Chinese BeiDou system and/or the Russian GLONASS system, and to determine a location of the machine using the received signals. Alternatively or additionally the positioning device may use light detection and ranging (LiDAR) technology, radio detecting and ranging (RADAR) technology, one or more cameras, an inertial measurement device or a combination thereof to determine position or to assist in determining position.

The user interface 34 includes components for receiving information, instructions or other input from a user and may include buttons, switches, dials, and microphones, as well as components for presenting information or data to users, such as displays, light-emitting diodes, audio speakers and so forth. The user interface 48 may include one or more touchscreen displays capable of presenting visual representations of information or data and receiving instructions or input from the user via a single display surface.

The sensors 36 may be associated with any of various components or functions of the tractor 10 including, for example, various elements of the drivetrain including the engine 20 or wheels 14, 16, transmission(s), and hydraulic and electrical systems. One or more of the sensors 36 may be configured and placed to detect environmental or ambient conditions in, around or near the tractor 10. Such environmental or ambient conditions may include temperature, humidity, wind speed and wind direction.

The actuators 38 are configured and placed to drive certain functions of the tractor 10 including, for example, moving the front wheels 14 to steer the tractor 10. The actuators 38 may take virtually any form but are generally configured to receive control signals or instructions from the controller 30 (or other component of the system 24) and to generate a mechanical movement or action in response to the control signals or instructions. By way of example, the sensors 36 and actuators 38 may be used in automated steering of the tractor 10 wherein the sensors 36 detect a current position or state of the steered wheels 14 and the actuators 38 drive steering action of the wheels. In another example, the sensors 36 collect data relating to the operation of the tractor 10 and store the data in the storage component 40, communicate the data to a remote computing device via the communications gateway, or both.

The controller 30 is a computing device or system and includes one or more integrated circuits programmed or configured to implement the functions described herein and associated with the tractor 10. By way of example the controller 30 may be a digital controller and may include one or more general purpose microprocessors or microcontrollers, programmable logic devices, application specific integrated circuits or other computing devices. The controller 30 may include multiple computing components, such as electronic control units, placed in various different locations on the harvester 10, and may include one or more computing devices connected to the system 24 through the I/O ports 42. The controller 30 may also include one or more discrete and/or analog circuit components operating in conjunction with the one or more integrated circuits or computing components. Furthermore, the controller 30 may include or have access to one or more memory elements operable to store executable instructions, data, or both. The storage component 40 stores data and preferably includes a non-volatile storage medium such as solid state, optic or magnetic technology.

The communications gateway 44 includes one or more wireless transceivers configured to communicate with external machines or devices using wireless communications technology. The communications gateway 44 may include one or more wireless transceivers configured to communicate according to one or more wireless communications protocols or standards, such as one or more protocols based on the IEEE 802.11 family of standards ("Wi-Fi"), the Bluetooth wireless communications standard, a 433 MHz wireless communications protocol or a protocol for communicating over a cellular telephone network. Alternatively or additionally, the communications gateway 44 may include one or more wireless transceivers configured to communicate according to one or more proprietary or non-standardized wireless communication technologies or protocols, such as proprietary wireless communications protocols using 2.4 GHz or 5 GHz radio signals. Thus, the communications gateway 44 enables wireless communications with other machines such as other harvesters or tractors, with external devices such as laptop or tablet computers or smartphones, and with external communications networks such as a cellular telephone network or Wi-Fi network.

It will be appreciated that, for simplicity, certain elements and components of the system 24 have been omitted from the present discussion and from the diagram illustrated in FIG. 2. A power source or power connector is also associated with the system 24, for example, but is conventional in nature and, therefore, is not discussed herein.

In the illustrated embodiment all of the components of the system 24 are contained on or in the tractor 10. The present invention is not so limited, however, and in other embodiments one or more of the components of the system 24 may be external to the tractor 10. In one embodiment, for example, some of the components of the system 24 are contained on or in the tractor 10 while other components of the system are contained on or in an implement associated with the harvester 10, such as the implement 26. In that embodiment, the components associated with the tractor 10 and the components associated with the implement may communicate via wired or wireless communications according to a local area network such as, for example, a controller area network. The system may be part of a communications and control system conforming to the ISO 11783 (also referred to as "ISOBUS") standard. In yet another embodiment, one or more components of the system 24 may be located separately or remotely from the tractor 10 and any implements associated with the tractor 10. In that embodiment, the system 24 may include wireless communications components (e.g., the gateway 44) for enabling the tractor 10 to communicate with another machine or a remote computer, computer network or system. It may be desirable, for example, to use one or more computing devices external to the tractor 10 to determine, or assist in determining, a slope of a ground surface on which the mobile machine will execute a turn; to determine, or assist in determining, a turn direction; or to plan, or assist in planning, a turn maneuver as explained herein.

The controller 30 is configured to automatically control movement of the tractor 10 using, for example, data from the position determining device 32 and from the sensors 36 to control the ground engaging elements 14, 16 and/or the motive system 20 using the actuators 38. In particular, the controller 30 is configured to plan a turn maneuver according to the slope of the ground surface on which the tractor 10 will execute the turn and according to the location of the next working path, and to automatically control the tractor 10 to execute at least a portion of the planned turn maneuver. The controller 30 is configured to plan K turns or Y turns, as explained below.

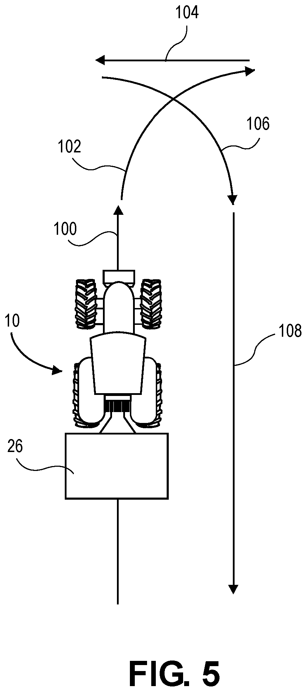

An exemplary K turn executed by the tractor 10 at the end of a working path is illustrated in FIG. 5. The tractor 10 advances along working path 100 in the forward direction corresponding to the direction of the arrow, as shown. When the tractor 10 reaches the end of the working path 100 it turns toward the right along path 102. The tractor 10 stops, then travels in a reverse direction along path 104, stops again, and then travels in the forward direction while turning toward the right along path 106 to begin travelling along working path 108 in the direction of the arrow.

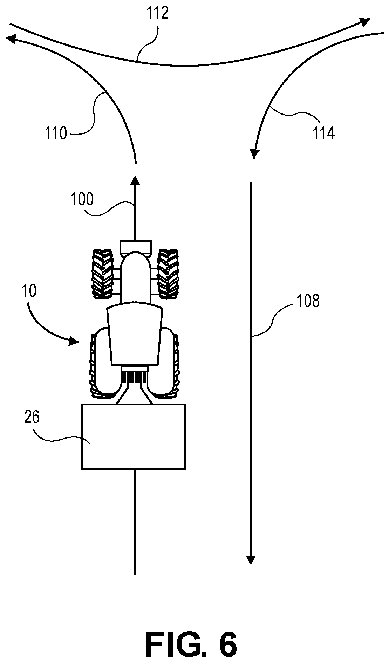

An exemplary Y turn executed by the tractor 10 at the end of a working path is illustrated in FIG. 6. The tractor 10 advances along working path 100 in the forward direction corresponding to the direction of the arrow, as shown. When the tractor 10 reaches the end of the working path 100 it turns to the left along path 110. The tractor 10 stops, then travels in a reverse direction along path 112, and then travels in the forward direction while turning toward the left along path 114 until it reaches the beginning of the next working path 108 and begins travelling along working path 108 in the direction of the arrow.

As used herein, a right K turn means the first path segment of the turn maneuver curves toward the right from the perspective of the tractor 10. Similarly, a left K turn means the first path segment curves toward the left, a right Y turn means the first path segment curves toward the right and a left Y turn means the first path segment curves toward the left. Thus, FIG. 5 illustrates a right K turn and FIG. 6 illustrates a left Y turn.

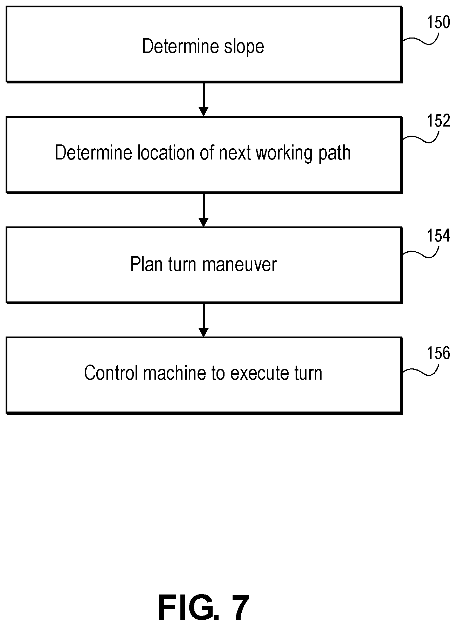

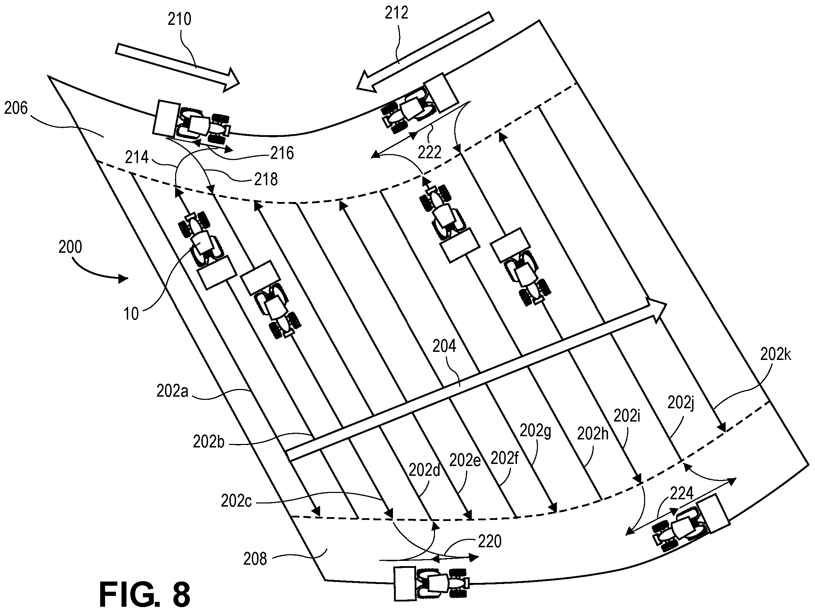

An exemplary method of planning and executing a turn is illustrated in the flow diagram of FIG. 7. The method includes determining a slope of a ground surface on which the mobile machine will execute a turn, as depicted in block 150; determining a location of a next working path, as depicted in block 152; planning a turn maneuver according to the slope of the ground surface on which the mobile machine will execute the turn and the location of the next working path, as depicted in block 154; and automatically controlling the mobile machine to execute at least a portion of the planned turn maneuver, as depicted in block 156. The method depicted in FIG. 7 will be described in greater detail with reference to an exemplary work scenario illustrated in FIG. 8.

In the scenario illustrated in FIG. 8, the tractor 10 works a field 200 following a series of working paths 202a-k. The tractor 10 moves along the working paths 202a-k in a back-and-forth pattern such that the tractor 10 follows a first working path in the direction indicated by the arrow in the drawing, then turns around and begins working the next, adjacent working path in a direction opposite the travel direction of the first path. The tractor 10 progresses through the field 200 along a direction indicated by arrow 204 such that the tractor 10 first moves along working path 202a, then turns and moves along 202b, then 202c and so forth until it completes working path 202k. The field 200 includes headlands 206 and 208 located at opposing ends of the field 200. The tractor 10 executes turn maneuvers in the headlands 206 and 208. The headlands 206 and 208 may be areas that are worked separately from the working paths 202a-k or that are not worked at all. The field surface is sloped as indicated by arrows 210 and 212, wherein each arrow 210, 212 points in a downhill direction. The ground surface slope indicated by arrows 210 and 212 is consistent through the length of the field 200 from headland 206 to headland 208.

Four turn maneuvers are illustrated in FIG. 8 and discussed herein to illustrated principles of the present teachings with the understanding that the tractor 10 may use similar turn maneuvers for any or all of the other turns executed during the working of the field 200.

As the tractor 10 travels along working path 202b in the direction indicated by the arrow on the working path 202b, the controller 30 plans a turn maneuver to be executed in the headland 206 when the tractor 10 reaches the end of the working path 202b. To plan the turn maneuver the controller 30 determines the slope of the ground surface on which the tractor 10 will execute the turn, which corresponds to an area in the headland 206 proximate working paths 202b and 202c. The controller 30 determines the slope using pre-existing data describing the elevation, slope or both of the surface of the field 200. The pre-existing data may include topographical map data or similar three-dimensional data wherein the controller 30 identifies the portion of the data corresponding to the ground surface on which the tractor 10 will execute the turn. Alternatively or additionally, the controller 30 may record field elevation and/or slope information using a positioning apparatus, orientation sensors, or both as it travels the field 200 and may use the recorded field elevation and/or slope information to determine the slope of the ground surface on which it will execute the turn. As the tractor 10 moves along working path 202b the slope of the ground surface on which the tractor 10 will execute the turn is downward and to the right from the perspective of the tractor, as indicated by arrow 210.

In addition to determining the slope of the ground surface, the controller 30 determines the location of the next working path. As the tractor 10 moves along the working path 202b the next working path is toward the right of the present working path because the next working path is 202c, located to the right of the working path 202b that the tractor 10 is currently following from the perspective of the tractor 10 as the tractor 10 moves along the working path 202b. In some implementations the controller 30 determines the location of the next working path by creating a path plan before beginning work in the field 200 that includes all of the working paths 202a-k. In other implementations the controller 30 automatically guides the tractor 10 according to a back-and-forth pattern, as described above, without a complete path plan for the field. In those implementations the controller 30 determines the location of the next working path using the location of the previous working path and the location of the present working path to determine the location of the next working path.

The controller 30 plans a turn maneuver according to the slope of the ground surface on which the tractor 10 will execute the turn maneuver and according to the location of the next working path. Table 1 illustrates how the controller 30 uses the slope and next working path information to plan the turn maneuver. If the location of the next working path is to the right of the current working path from the perspective of the tractor 10 and the ground surface on which the tractor 10 will execute the turn maneuver slopes downward to the right from the perspective of the tractor 10, the controller 30 plans a right K turn. If the location of the next working path is to the left of the current working path and the ground slopes downward to the left, the controller 30 plans a left K turn. If the location of the next working path is to the left of the current working path and the ground slopes downward to the right, the controller 30 plans a right Y turn. If the location of the next working path is to the right of the current working path and the ground slopes downward to the left, the controller 30 plans a left Y turn.

**Table 1**

| **Next working path** | **Slope direction** | **Type of turn** |
|---|---|---|
| Right | Right | Right K |
| Left | Left | Left K |
| Left | Right | Right Y |
| Right | Left | Left Y |

With reference to FIG. 8, as the tractor 10 moves along working path 202b the controller 30 uses the ground slope information and the location of the next working path to plan a right K turn to avoid the tractor 10 traveling in reverse along a downward slope of the ground surface. The tractor 10 executes the K turn maneuver by traveling forward and turning to the right along path segment 214, stopping and travelling in reverse along path segment 216, stopping again and traveling forward and turning to the right along path segment 218 toward the working path 202c. As the tractor 10 moves along path segments 214 and 218 it is travelling downhill (for at least a portion of each of the segments), but that does not present a tipping risk because the tractor 10 is moving in the forward direction. As the tractor 10 moves along path segment 216 it is moving in the reverse direction, but that does not present a tipping risk because the tractor 10 is moving uphill. Thus, the use of the right K turn in the manner illustrated in FIG. 8 to transition from working path 202b to 202c allows the tractor 10 to make the transition without the risk of tipping because the tractor 10 does not travel in the reverse direction downhill even though the ground surface on which the tractor 10 executes the turn is sloped.

As the tractor advances in the forward direction along working path 202c it will turn to enter subsequent working path 202d which is located to the left of the tractor's current working path 202c from the tractor's perspective as it progresses along working path 202c. The ground surface on which the tractor 10 will execute the turn to transition from working path 202c to working path 202d corresponds to an area in headland 208 near working paths 202c and 202d. The ground surface in that area slopes downward and to the left from the perspective of the tractor as it approaches the end of the working path 202c. To avoid driving in the reverse direction downhill, the controller plans a left K turn such that when the tractor 10 moves in the reverse direction along segment 220 it is moving uphill.

As the tractor 10 advances in the forward direction along working path 202h it will turn to enter subsequent working path 202i which is located to the right of the tractor's current working path 202h from the tractor's perspective as it progresses along working path 202h. The ground surface on which the tractor 10 will execute the turn to transition from working path 202h to working path 202i corresponds to an area in headland 206 near working paths 202h and 202i. The ground surface in that area slopes downward and to the left from the perspective of the tractor 10 as it approaches the end of the working path 202h. To avoid driving in the reverse direction downhill, the controller plans a left Y turn such that when the tractor 10 moves in the reverse direction along segment 222 it is moving uphill.

As the tractor 10 advances in the forward direction along working path 202i it will turn to enter subsequent working path 202j which is located to the left of the tractor's current working path 202i from the tractor's perspective as it progresses along working path 202i. The ground surface on which the tractor 10 will execute the turn to transition from working path 202i to working path 202j corresponds to the area in the headland 208 near working paths 202i and 202j. The ground surface in that area slopes downward and to the right from the perspective of the tractor 10 as it approaches the end of the working path 202i. To avoid driving in the reverse direction downhill, the controller plans a right Y turn such that when the tractor 10 moves in the reverse direction along segment 224 it is moving uphill.

After the controller 30 has planned the turn maneuver according to the slope of the ground surface on which the tractor 10 will execute the turn, it automatically controls the tractor 10 to execute at least a portion of the planned turn maneuver. The controller 30 uses data from the position determining device 32 to navigate the tractor 10 along the turn path segments defining the turn maneuver by controlling, for example, elements of the motive system 20 and actuators 38 to move, steer and/or brake the tractor 10. The turn maneuver defined by path segments 214, 216 and 218 will be used as an example. In some implementations the controller 30 entirely controls movement of the tractor 10 as it executes the turn maneuver by steering the tractor 10 to follow the first path segment 214, stopping the tractor 10 at the end of the first path segment 214, driving the tractor 10 in reverse along path segment 216, stopping the tractor 10 at the end of path segment 216, and driving the tractor forward and steering it to follow path segment 218. In other implementations, the controller 30 controls the movement of the tractor 10 execute only part of the turn maneuver, such as where an operator manually controls the tractor 10 during a portion of the turn maneuver. The controller 30 may automatically move the tractor 10 along path segment 214, for example, the operator manually stops the tractor 10, manually drives the tractor 10 in reverse along path segment 216, manually stops the tractor 10 at the end of path segment 216 and then allows the controller 30 to automatically guide the tractor 10 along path segment 218.

Embodiments of the present invention address the problem of machine tipping described above by planning turn maneuvers that include a first downhill forward path segment, a second uphill reverse path segment, and a third downhill forward path segment. This type of turn maneuver avoids scenarios where tipping is likely because the machine does not travel in reverse along a downward slope or forward along an uphill slope. In some particular embodiments, the first path segment is a curved path segment from an end of a first working path to a first end of the second path segment, the second path segment is substantially straight, and the third path segment is a curved path segment from a second end of the second path segment to an end of a second working path. In other embodiments, the second path segment is curved. The amount of curvature of the first, second and third path segments depends on such factors as the locations and orientations of the first and second working paths relative to one another and the shape and size of the headland in which the turn maneuver is executed.

Although the invention has been described with reference to the preferred embodiment illustrated in the attached drawing figures, it is noted that equivalents may be employed and substitutions made herein without departing from the scope of the invention as recited in the claims. While the mobile machine is described and illustrated as a tractor carrying a mounted implement, other types of mobile machines are within the ambit of the present invention. The mobile machine may be, for example, a harvester with a header such as a combine harvester or a windrower that under certain conditions may be at risk of tipping forward, or in the direction of the header. To avoid the risk of such forward tipping in a harvester the controller 30 may plan turn maneuvers similar to those described herein except that they avoid the machine moving downhill in a forward direction.

Furthermore, while the controller 30 is described in some embodiments as determining the slope of the ground surface on which the mobile machine will execute the turn, determining the location of the next working path and planning the turn maneuver while the tractor 10 is working the field 200, the invention is not so limited. The controller 30 may be configured to perform those steps (corresponding to steps 150, 152 and 154 of the method illustrated in FIG. 7) prior to the tractor 10 beginning work in the field. To do so the controller 30 may create a plan for the field 200, or use an existing plan, that defines working paths 202a-k and may plan the turn maneuvers for the entire field prior to beginning work in the field based on the plan.

The claims at the end of this patent application are not intended to be construed under 35 U.S.C. § 112(f) unless traditional means-plus-function language is expressly recited, such as "means for" or "step for" language being explicitly recited in the claim(s).

Having thus described the preferred embodiment of the invention, what is claimed as new and desired to be protected by Letters Patent includes the following:

## Claims

1. A mobile machine comprising:
a chassis;
a motive system;
one or more ground engaging elements for supporting the chassis on a ground surface and moving the mobile machine along the ground surface, at least one of the ground engaging elements being driven by the motive system to move the mobile machine along the ground surface; and
a controller configured to -
determine a slope of a ground surface on which the mobile machine will execute a turn,
determine a location of a next working path,
plan a turn maneuver according to the slope of the ground surface on which the mobile machine will execute the turn maneuver and according to the location of the next working path, and
automatically control the mobile machine to execute at least a portion of the planned turn maneuver.

2. The mobile machine as set forth in claim 1, the controller configured to plan the turn maneuver such that the mobile machine does not move in reverse downward on a sloping ground surface.

3. The mobile machine as set forth in either claim 1 or claim 2, the controller further configured to plan the turn maneuver such that the turn maneuver includes a first downhill forward path segment, a second uphill reverse path segment, and a third downhill forward path segment.

4. The mobile machine as set forth in claim 3, the first path segment being a curved path segment from an end of a first working path to a first end of the second path segment, the second path segment being substantially straight, and the third path segment being a curved path segment from a second end of the second path segment to an end of a second working path.

5. The mobile machine as set forth in any preceding claim, the controller further configured to: plan a K turn if the next working path is to the right and the ground surface is sloped downward toward the right.

6. The mobile machine as set forth in any preceding claim, the controller further configured to plan a K turn if the next working path is to the left and the ground surface is sloped downward toward the left.

7. The mobile machine as set forth in any preceding claim, the controller further configured to plan a Y turn if the next working path is to the left and the ground surface is sloped downward toward the right.

8. The mobile machine as set forth in any preceding claim, the controller further configured to plan a Y turn if the next working path is to the right and the ground surface is sloped downward toward the left.

9. The mobile machine as set forth in any preceding claim, the controller further configured to:
use pre-existing data to determine the slope of the ground surface; and/or
determine the slope of the ground surface by detecting and recording elevation and/or tilt of the mobile machine as it travels along the ground surface.

10. A method of controlling a mobile machine, the method comprising:
determining, using a controller, a slope of a ground surface on which the mobile machine will execute a turn;
determining, using the controller, a location of a next working path;
planning, using the controller, a turn maneuver according to the slope of the ground surface on which the mobile machine will execute the turn maneuver and according to the location of the next working path; and
automatically controlling the mobile machine, using the controller, to execute at least a portion of the planned turn maneuver.

11. The method as set forth in claim 10, further comprising planning, using the controller, the turn maneuver such that the mobile machine does not move in reverse downward on a sloping ground surface.

12. The method as set forth in either claim 9 or claim 10, further comprising planning, using the controller, the turn maneuver such that the turn maneuver includes a first downhill forward path segment, a second uphill reverse path segment, and a third downhill forward path segment.

13. The method as set forth in 12, the first path segment being a curved path segment from an end of a first working path to a first end of the second path segment, the second path segment being substantially straight, and the third path segment being a curved path segment from a second end of the second path segment to an end of a second working path.

14. The method as set forth in any of claims 10 through 13, further comprising determining, using the controller:
the slope of the ground surface using pre-existing data; and/or
the slope of the ground surface by detecting and recording elevation and/or tilt of the mobile machine as it travels along the ground surface.

15. The method as set forth in any of claims 10 through 14, further comprising planning, using the controller:
a K turn if the next working path is to the right and the ground surface is sloped downward toward the right;
a K turn if the next working path is to the left and the ground surface is sloped downward toward the left;
a Y turn if the next working path is to the left and the ground surface is sloped downward toward the right; and/or
a Y turn if the next working path is to the right and the ground surface is sloped downward toward the left.
